# EUROPEAN PATENT SPECIFICATION

(11) **EP 2 962 920 B1**
(45) Date of publication and mention of the grant of the patent: **13.01.2021**
(21) Application number: 15175432.2
(22) Date of filing: 06.07.2015
(51) Int. Cl.: B62H 5/14

(54) **RING LOCK AND METHOD FOR MANUFACTURING A RING LOCK**
RAHMANSCHLOSS UND VERFAHREN ZUR HERSTELLUNG EINES RAHMENSCHLOSS
ANTIVOL DE CADRE ET PROCÉDÉ DE FABRICATION DE UN ANTIVOL DE CADRE

(30) Priority: 04.07.2014 NL 2013133
(43) Date of publication of application: 06.01.2016
(73) Proprietor: Allegion Netherlands B.V., 3903 AV Veenendaal (NL)
(72) Inventor: Stunnebrink, Marco Dimphina Henricus, 3903 AV Veenendaal (NL); Mendivelso, Elmer Curcho, 3903 AV Veenendaal (NL); Hutten, Jan Gerbrand, 3903 AV Veenendaal (NL)
(74) Representative: V.O.

(56) References cited:
- EP-A1- 0 550 795
- EP-A1- 1 686 049
- EP-A1- 1 834 864
- DE-A1- 2 519 068
- DE-A1- 3 308 977
- DE-U1- 8 004 739
- NL-A- 8 303 428
- US-A- 5 802 889

## Description

The invention relates to a method for manufacturing a ring lock which can be applied to a cycle, such as a bicycle, an electric bicycle, a moped, a go-cart, or like vehicles.

A ring lock with a welded connection is known from *inter alia* the publications DE25 19 068, NL 1.021.598 and EP 1.834.864.

EP 1.834.864 discloses a method having the features which are mentioned in the pre-characterizing portion of claim 1.

The front lock cap legs, the rear lock cap legs, the front lock cap body and the rear lock cap body are provided with outwardly directed circumferential flanges which are configured to adjoin each other and to be welded together by laser welding or spot welding.

The disadvantage of a traditional spot welding technique is that it leads to a substantial heat generation in the lock and may thereby lead to damage of parts included between the front lock cap and the rear lock cap. The lock caps themselves too may be damaged by the known spot welding process, so that, for instance, a protective coating, such as, for example, a zinc coating, is damaged and an extra processing operation for applying a protective coating after the welding process is necessary. In spot welding, the spot (weld) that is welded mostly has a diameter of 4 to 5 times the plate thickness. The spot welds are mutually spaced apart and between the spot welds the front and rear caps are not connected with each other. This creates the possibility of applying a breaking tool between the spot welds in order to break the lock open. Moreover, spot welds are not provided in one go but in a number of welding operations. Only one or two spots at a time can be welded per welding operation. Providing the spot welds is therefore time consuming and hence costly. Also, it is not possible to connect end edges of the steel directly to each other by spot welding.

Another disadvantage of the lock known from DE25 19 068 and EP1834864 is constituted by the circumferential flange at the front lock cap body and the rear lock cap body. This circumferential flange takes up considerable space, which limits the assembly possibilities of the lock.

The invention provides the method of claim 1 for manufacturing a ring lock. The invention has a number of advantages over DE25 19 068 and EP1834864. Firstly, in capacitor discharge welding, less heat is induced than in spot welding, so that the temperature increase of the front lock cap and rear lock cap and of the parts at least partly included therein, is small. In capacitor discharge welding, entire continuous contours can be welded in one go. Differences in material and plate thickness in the various welding areas are much less of influence on the capacitor discharge weld process. With the aid of capacitor discharge welding it is possible to connect the entire circumferential contour of the lock by a capacitor discharge weld connection in one capacitor discharge welding operation. Moreover, it is possible to realize this capacitor discharge weld connection at the front lock cap body and the rear lock cap body without providing a circumferential flange there, in that the end edges of the front lock cap body and the rear lock cap body can be connected with each other directly. As there is no flange necessary at the front lock cap body and the rear lock cap body, the lock can remain reasonably small. Consequently, it fits bicycles and other cycles better, even when the assembly space on them is limited. Realizing such a weld connection extending substantially along the entire circumferential contour is not possible with the aid of conventional welding techniques such as spot welding. As disclosed in EP1834864 for obtaining a weld *throughout the joint uniting the front and rear half housing..... it is intended to employ laser welding.* To that end, EP1834864 discloses that *one particularity of the invention consists of the fact that, towards the outside, said front and rear half-housings form respective peripheral edges that are capable of resting on one anouther and bing joined by welding....* The drawings of EP1834864 disclose that the *peripheral edges* are circumferential flanges as discussed above.

Both at the lock cap legs, formed by the assembly of the front lock cap legs and the rear lock cap legs, and at the lock cap body, formed by the assembly of the front lock cap body and the rear lock cap body, prior to the capacitor discharge weld process, at least one contact surface as mentioned is present at which, following the capacitor discharge weld process, a capacitor discharge weld connection is formed.

Thus, cracking the lock is virtually impossible both at the lock cap legs and at the lock cap body. This is achieved in particular in that the capacitor discharge weld connection is a continuous connection and not, as with spot welding, a local connection, where in effect there is no connection between the spot welds.

The rear lock cap and/or the front lock cap may be provided with at least one indentation which in a condition of the front lock cap and the rear lock cap placed on each other prior to the capacitor discharge weld process forms a contact surface that is configured as a line contact between the front lock cap and the rear lock cap, wherein in the condition of the front lock cap and the rear lock cap placed on each other the two caps touch each other via the line contacts, and wherein after the capacitor discharge weld process at the line contacts mentioned a capacitor discharge weld connection is formed between the front lock cap and the rear lock cap.

This has as an advantage in that the contact surface configured as line contact has a small surface, so that the heat generation thereat is optimal, while the transmitted electric power is relatively small. The amount of heat energy, however, owing to the small contact surface, is relatively small, with the advantage that the conduction of the heat to the contiguous parts of the lock is small. As a result, damage of lock parts or of the front lock cap and/or rear lock cap will not readily occur. Another advantage of a capacitor discharge weld connection formed from the line contact connection is that this creates a continuous connection zone without interruptions. Breaking open such a continuous connection zone is practically impossible.

The front lock cap legs and the rear lock cap legs may be provided with outer flanges which have an outer flange length that corresponds substantially to a length of the leg associated with a respective outer flange, while an at least one indentation is provided in at least one of two opposite outer flanges such that at the at least one indentation prior to the capacitor discharge weld process a line contact is formed between opposite outer flanges of a front lock cap and a rear lock cap, respectively, and following the capacitor discharge weld process at the line contact mentioned a capacitor discharge weld connection is formed which connects the opposite outer flanges with each other substantially along the entire outer flange length.

Connecting the outer flanges with a capacitor discharge weld along substantially the entire outer flange length contributes to a firm connection between the front lock cap and the rear lock cap at the lock cap legs (which are formed by the front lock cap legs and rear lock cap legs). This is also important towards preventing the lock being broken open at the lock cap legs.

A further advantage of a robust connection can be achieved by providing the front lock cap legs and the rear lock cap legs with inner flanges, while an at least one indentation is provided in at least one of two opposite inner flanges such that at the at least one indentation prior to the capacitor discharge weld process a line contact is formed between opposite inner flanges of a front lock cap and a rear lock cap, respectively, and following the capacitor discharge weld process at the at least one line contact a capacitor discharge weld connection is formed. The firm connection at the inner flanges also contributes to a good basis for connecting the ring lock with, for example, a bicycle which it may be a part of.

The front lock cap body and the rear lock cap body may be provided with mutually facing plate end edges which prior to the capacitor discharge weld process form a contact surface, and following the capacitor discharge weld process at the mutually facing plate end edges at least one capacitor discharge weld connection is formed.

By connecting the front lock cap and the rear lock cap with a capacitor discharge weld connection at the lock cap body, a robust connection is realized which makes breaking open the ring lock at the top more difficult. In contrast to DE 25 19 068, the front lock cap body and the rear lock cap body are not provided with a circumferential flange but the mutually facing plate end edges are connected with each other directly by the capacitor discharge weld connection. Through the absence of these circumferential flanges at the lock cap body, the lock can also be mounted on cycles where the mounting space is relatively limited. Moreover, the end plate end edge connection and the line contact connection at the front lock cap legs and rear lock cap legs can be realized in a single capacitor discharge welding operation - that is, in a single current surge. The production time is therefore particularly short, while the connection between the front lock cap and the rear lock cap is much better resistant to sabotage and breaking.

The mutually facing plate end edges can extend substantially along the entire circumference of the front lock cap and the rear lock cap to form the contact surface which, following the capacitor discharge weld process, forms the capacitor discharge weld connection. That is to say, both at the body and at the legs. In that case, the provision of indentations may be dispensed with. All capacitor discharge weld connections can be formed at mutually facing plate end edges. The front lock cap legs and the rear lock cap legs do not need to be provided with outer flanges, which yields a saving of material. Nor are the inner flanges necessary anymore for establishing a connection between the front lock cap and the rear lock cap. Such inner flanges, however, may still be of benefit for the purpose of mounting the ring lock to a cycle.

In order to enable, in addition to capacitor discharge welding, a traditional manner of connection as well, the front lock cap and the rear lock cap may be provided with at least one opening for connecting the front lock cap and rear lock cap by means of rivets.

The front lock cap and the rear lock cap may each be manufactured by at least one punching operation from plate material extending in a plate plane, whereby in the at least one punching operation there are formed:
- the front lock cap with two front lock cap legs which are connected with the front lock cap body;
- the rear lock cap with two rear lock cap legs which are connected with the rear lock cap body;
- at least one indentation for forming a contact surface between the front lock cap and the rear lock cap; and/or
- at least one plate end edge, extending at right angles to the plate plane to form a contact surface between the front lock cap and the rear lock cap.

The punching operation makes for lower manufacturing costs. In addition, the (automated) punching operation makes it possible to provide the lock caps in one processing operation with all form features advantageous for capacitor discharge welding, such as the above-described indentations and/or the above-described mutually facing plate end edges to form contact surfaces with a particularly small total contact surface.

The advantage of the method according to the invention is that in capacitor discharge welding heat is supplied very locally. As a result, the firmness of a welded connection is realized without the parts included between the front lock cap and rear lock cap, viz., the bolt and the lock housing with lock assembly included therein, sustaining a large increase of temperature. In addition, the very local supply of heat provides the advantage that the on-site heat generation is optimal, at a relatively low transmitted electric power. Moreover, the method according to the invention has the advantage that it is possible to connect the entire outer circumferential contour of the lock with each other substantially along the entire length thereof with a single current surge. This in contrast to the spot welded connections that are made in the lock known from DE 25 19 068. Such spot welds are provided singly, and between the spot welds the front lock cap and the rear lock cap are not connected with each other, so that with this known lock breaking open the lock by prying a screwdriver between two neighboring spot welds is one of the possibilities.

According to the method of the invention, the lock cap legs, formed by the front lock cap legs and the rear lock cap legs, as well as the lock cap body, formed by the front lock cap body and the rear lock cap body, may each be provided with at least one contact surface that extends along substantially the entire outer contour of the lock cap legs and along substantially the entire outer contour of the lock cap body. Thus, the lock cap, formed by the front lock cap and the rear lock cap, is provided at at least three places, more particularly along the entire outer contour, with a capacitor discharge weld connection which makes breaking open the lock more difficult.

The contact surfaces are formed by line contacts and/or mutually facing plate end edges, with a total contact surface of less than 700 mm², preferably less than 500 mm².

By the use of contact surfaces in the form of line contacts or mutually facing plate end edges with a total contact surface of less than 700 mm² and preferably less than 500 mm², a high local heat supply can be attained at a relatively low electric power. In addition, a limited contact surface also leads to a limited temperature increase in the other parts of the lock cap during welding, so that damage of parts in the lock cap is avoided.

In an embodiment, the at least one contact surface may be formed exclusively by mutually facing plate end edges, which extend substantially along the entire circumferential length of the front lock cap and the rear lock cap. Both at the body and at the legs, the contact surface is then formed by mutually facing plate end edges which after the capacitor discharge weld process form the capacitor discharge weld connection. The provision of indentations then is not necessary anymore and also the presence of outer flanges can be dispensed with.

Providing the capacitor discharge weld connections at all contact surfaces is carried out in a single welding operation, that is, with a single current surge.

All connections are therefore established in a single operation, so that a high production capacity can be obtained. In any case, the provision of the connection between the front lock cap and the rear lock cap does not constitute a bottleneck in the production process because it merely comprises placing the two caps on each other, pressing-on, and transmitting a large current surge through the two caps.

In an embodiment, in the front lock cap and/or the rear lock cap at least one indentation may be provided which, in a condition of the front lock cap and rear lock cap placed on each other, forms a contact surface between the front lock cap and the rear lock cap.

During capacitor discharge welding, the front lock cap and the rear lock cap are pressed onto each other with a force of at least 80 kN. This force contributes to the bringing about of a good capacitor discharge weld connection.

In an embodiment, during the capacitor discharge welding, no welding material is added. This leads to lower costs and a lower consumption of material. Moreover, no, or hardly any, damage of the front lock cap and the rear lock cap occurs as a result of the capacitor discharge weld process.

The surface area of the contact surfaces is so small that during the capacitor discharge welding the generation of heat in the front lock cap and the rear lock cap occurs only locally and, as a result, the increase of temperature of the bolt and the lock housing with the lock assembly included therein is less than 50 °C and preferably less than 40 °C. By staying below this temperature increase in the method, damage of the lock parts, among which the bolt and the lock housing including lock assembly, is prevented.
Fig. 1 is a front view of an example of an example of the ring lock according to the invention prior to the provision of the capacitor discharge weld connections;
Fig. 2 is a rear view of the ring lock represented in Fig. 1;
Fig. 3 is a side view of the ring lock represented in Fig. 1;
Fig. 4 is a top plan view of the ring lock represented in Fig. 1;
Fig. 5 is a cross-sectional view along the line V-V in Fig. 1;
Fig. 5a is a detailed view of Va in Fig. 5;
Fig. 6 is a cross-sectional view along the line VI-VI in Fig. 1;
Fig. 6a is a detailed view of VIa in Fig. 6;
Fig. 7 is a cross-sectional view along the line VII-VII in Fig. 2;
Fig. 7a is a detailed view of the element VIIa in Fig. 7;
Fig. 8 is a side view of an embodiment of the ring lock of Fig. 1, but now after the provision of the capacitor discharge weld connections;
Fig. 9 is a top plan side view of an embodiment of the ring lock of Fig. 1, but now after the provision of the capacitor discharge weld connections;
Fig. 10 is a cross-sectional view along the line V-V in Fig. 1, but now after the provision of the capacitor discharge weld connections;
Fig. 10a is a detailed view of Va in Fig. 10;
Fig. 11 is a cross-sectional view along the line VI-VI in Fig. 1, but now after the provision of the capacitor discharge weld connections;
Fig. 11a is a detailed view of VIa in Fig. 11, but now after the provision of the capacitor discharge weld connections;
Fig. 12 is a cross-sectional view along the line VII-VII in Fig. 2, but now after the provision of the capacitor discharge weld connections; and Fig. 12a is a detailed view of VIIa in Fig. 12.

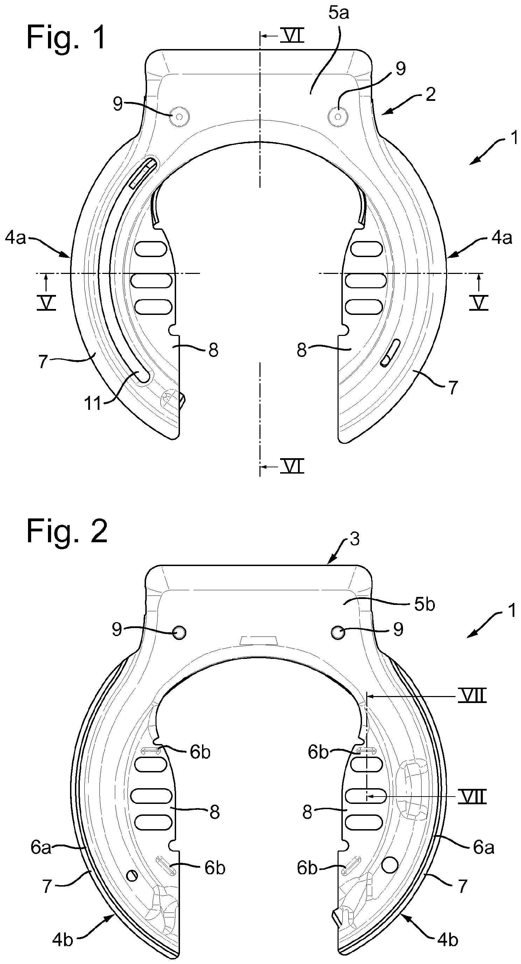

Fig. 1 is a front view of an example of a ring lock 1 prior to the provision of the capacitor discharge weld connections. There is shown a ring lock 1 with a front lock cap 2 with front lock cap legs 4a, which are connected with a front lock cap body 5a, which partly encompass a bolt 11 and a lock housing with a lock assembly included therein (not shown). The figure also shows outer flanges 7, having an outer flange length extending along the entire length of the outer flange, and inner flanges 8 of the front lock cap 2. Also shown are the openings 9 in which rivets may be provided.

Fig. 2 is a rear view of the ring lock 1 shown in Fig. 1. In it, a rear lock cap 3 is visible with rear lock cap legs 4b, which are connected with a rear lock cap body 5b. Further, outer flanges 7 of the rear lock cap legs 4a are shown, with an indentation 6a extending along the entire length thereof. Also shown are indentations 6b in inner flanges 8 of the rear lock cap legs 4b. Visible are also the openings 9 for fitting rivets.

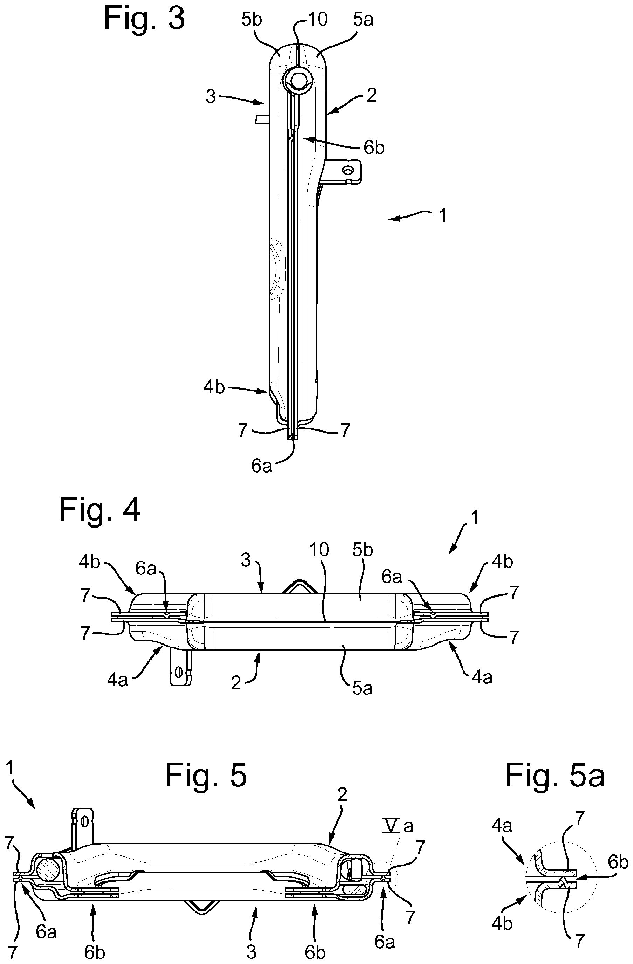

Fig. 3 shows a side view of the ring lock 1 of Fig. 1 prior to the provision of the capacitor discharge weld connections. In the figure the contact surfaces between the front lock cap 2 and rear lock cap 3 are represented. These are formed in this example by:
- indentations 6a in the outer flanges 7 of rear lock cap legs 4b,
- indentations 6b in the inner flanges (see Fig. 5) of the rear lock cap legs 4b, and
- the mutually facing plate end edges 10 between front lock cap body 5a and rear lock cap body 5b.

Fig. 4 is a top plan view of the example of the ring lock 1 represented in Fig. 1 prior to the provision of the capacitor discharge weld connections, also showing the plate end edges 10, bent towards each other, of the front lock cap body 5a and the rear lock cap body 5b. Also visible are the contact surfaces, formed by the indentations 6a in the outer flanges 7 of the rear lock cap 3, at which the front lock cap legs 4a and rear lock cap legs 4b touch each other.

Fig. 5 is a cross-sectional view along the line V-V in Fig. 1 prior to the provision of the capacitor discharge weld connections. The depicted ring lock 1 with a front lock cap 2 and a rear lock cap 3 is provided with indentations 6a, 6b in the outer flanges 7 and inner flanges 8, respectively, which form a line contact indentation 6a between the front lock cap 2 and the rear lock cap 3. The line contacts mentioned form the contact surfaces at which the capacitor discharge weld connection is formed. A detailed view of the contact surface between the outer flanges 7 of the front lock cap legs 4a and the rear lock cap legs 4b, formed by the indentation 6a, is represented in Fig. 5a.

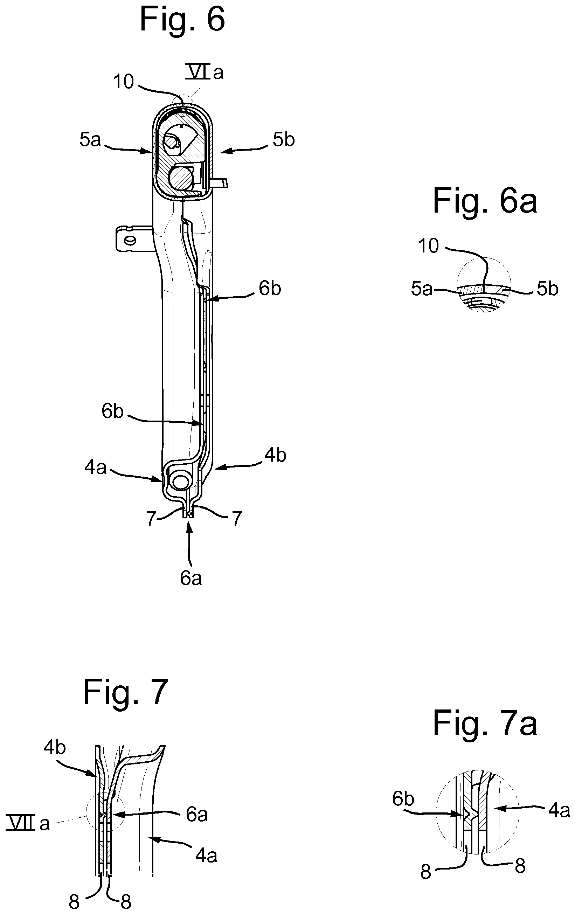

Fig. 6 is a cross-sectional view along the line VI-VI in Fig. 1, prior to the provision of the capacitor discharge weld connections. Fig. 6 shows the front lock cap body 5a and the rear lock cap body 5b with the mutually facing plate end edges 10 thereat forming a contact surface. An enlargement of the contact surface in detail VIa is given in Fig. 6a. Also represented is the contact surface between the outer flanges 7 of the front cap legs 4a and the rear lock cap legs 4b, formed by the indentation 6a. Further, the contact surface between the inner flanges 8 of the front lock cap legs 4a and the rear lock cap legs 4b, formed by the indentation 6b, is visible.

Fig. 7 is a cross-sectional view along the line VII-VII in Fig. 2. Fig. 7 shows an indentation 6b between the inner flanges 8 of the front lock cap legs 4a and the rear lock cap legs 4b. An enlargement of the indentation 6b in detail VIIa is represented in Fig. 7a.

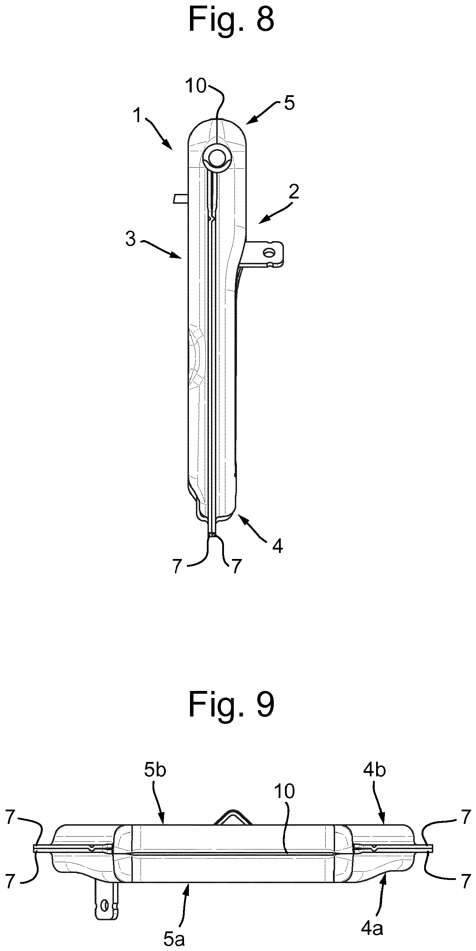

Figs. 8-12a show an example of the ring lock after the provision of the capacitor discharge weld connections. Fig. 8 is a side view of the example of the ring lock 1 after the provision of the capacitor discharge weld connections. The front lock cap 2 and rear lock cap 3 are connected to each other, with a contact surface provided at the lock cap body 5 and the lock cap legs 4. The lock cap body 5 is connected at the plate end edges 10 with a capacitor discharge weld connection, and the outer flanges 7 are mutually connected along an entire outer flange length of the outer flanges 7 through a capacitor discharge weld connection.

Fig. 9 is a top plan view of the example of the ring lock after provision of the capacitor discharge weld connections. There are shown the front lock cap body 5a and the rear lock cap body at the plate end edges 10, which form a contact surface and are connected there by a capacitor discharge weld connection. Also visible are the line contacts between the outer flanges 7 of the front lock cap legs 4a and the rear lock cap legs 4b, which are connected with a capacitor discharge weld connection along the entire outer flange length.

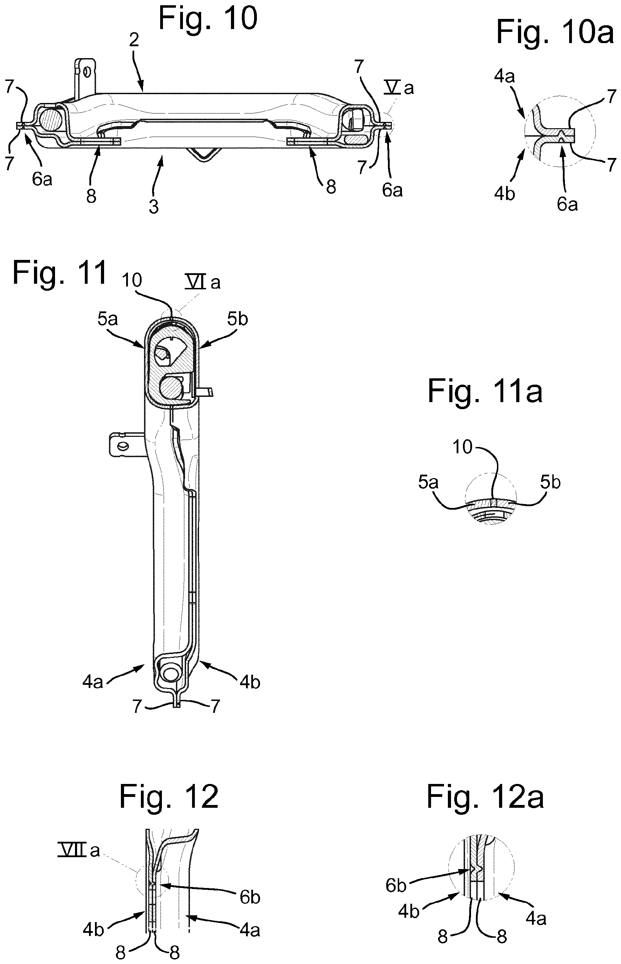

Fig. 10 is a cross-sectional view along the line V-V in Fig. 1, but now after the provision of the capacitor discharge weld connections. It is clearly visible that the front lock cap 2 and rear lock cap 3 are connected at the indentations 6a, 6b in the outer flanges 7 and inner flanges 8, respectively, through a capacitor discharge weld connection. An enlargement of the capacitor discharge weld connection between the outer flanges 7 of the front lock cap legs 4a and the outer flanges of the rear lock cap legs 4b at the indentation 6a is represented in Fig. 10a.

Fig. 11 is a cross section along the line VI-VI in Fig. 1, but now after the provision of the capacitor discharge weld connections. The figure shows the front lock cap body 5a and the rear lock cap body 5b with the mutually facing plate end edges 10 which form a contact surface at which a capacitor discharge weld connection is formed. An enlargement of the capacitor discharge weld connection at the mutually facing plate end edges 10 is shown in Fig. 11a. Fig. 11 also shows the capacitor discharge weld connection between the outer flanges 7 of the front lock cap legs 4a and the rear lock cap legs 4b.

Fig. 12 is a cross-sectional view along the line VII-VII in Fig. 2, but now after provision of the capacitor discharge weld connections. Fig. 12 shows the capacitor discharge weld connection at the indentation 6b between the inner flanges 8 of the front lock cap legs 4a and the rear lock cap legs 4b. An enlargement of that capacitor discharge weld connection at the indentation 6b in detail VIIa is given in Fig. 12a.

During capacitor discharge welding, for a short length of time a large electric current is conducted through the contact surfaces, formed by the indentations 6a, 6b and the mutually facing plate end edges 10, to form a capacitor discharge weld connection, such that the front lock cap 2 and the rear lock cap 3 are connected with each other by the capacitor discharge weld connections.

While the invention has been represented and described in detail with reference to the drawing, this drawing and this description are to be regarded merely as an example. In the example shown, for instance, there are outer flanges at the front lock cap legs and the rear lock cap legs, one of these outer flanges being provided with indentation. Instead of such outer flanges, the outer edges of the front lock cap legs and the rear lock cap legs may also be facing each other and prior to the capacitor discharge welding abut against each other to form a contact surface.

The invention is not limited to the embodiments described. Features that are described in dependent claims can be combined with each other. The reference numerals in the claims and the description of the drawings must not be construed as limitations of the embodiments to just the examples shown in the drawings, but serve for clarification only. Different combinations of embodiments are possible.

## Claims

1. A method for manufacturing a ring lock (1) comprising:
- a lock housing with a lock assembly included therein;
- a bolt (11);
- a front lock cap (2) with two front lock cap legs (4a) which are connected with a front lock cap body (5a); and
- a rear lock cap (3) with two rear lock cap legs (4b) which are connected with a rear lock cap body (5b);
wherein the method at least comprises:
- positioning the lock housing such that it is substantially between the front lock cap body (5a) and the rear lock cap body (5b),
- positioning the bolt (11) such that it extends through the lock housing and, at least in part, is included between the front lock cap legs (4a) and the rear lock cap legs (4b),
- positioning the front lock cap (2) and the rear lock cap (3) such that they abut against each other by contact surfaces,
- the lock cap legs (4), formed by the front lock cap legs (4a) and the rear lock cap legs (4b), as well as a lock cap body (5), formed by the front lock cap body (5a) and the rear lock cap body (5b), each being provided with at least one contact surface that extends along the entire outer contour of the lock cap legs (4) and along the entire outer contour of the lock cap body (5),
- pressing the front lock cap (2) and the rear lock cap (3) against each other, and
- welding together the front lock cap (2) and the rear lock cap (3) at the
contact surfaces;
**characterized in that**
the welding is capacitor discharge welding, whereby with a single current surge for a short length of time an electric current is conducted through the front lock cap and the rear lock cap via the contact surfaces, the length of time and the magnitude of the current and the voltage being such that at all
the contact surfaces the material of
the front lock cap and the rear lock cap fuses together and a capacitor discharge weld connection is formed there, wherein during the capacitor discharge welding the front lock cap (2) and the rear lock cap (3) are pressed onto each other with a force of at least 80 kN, wherein the contact surfaces are formed by line contacts and/or mutually facing plate end edges (10), with a total contact surface of less than 700 mm² and preferably less than 500 mm², and wherein the surface of the contact surfaces is so small that during the capacitor discharge welding the generation of heat in the front lock cap (2) and the rear lock cap (3) occurs only locally and, as a result, the increase of temperature of the bolt (11) and the lock housing with the lock assembly included therein is less than 50 °C and preferably less than 40 °C.

2. The method according to claim 1, wherein the at least one contact surface is exclusively formed by mutually facing plate end edges (10), which extend substantially along the entire circumferential length of the front lock cap (5a) and the rear lock cap (5b).

3. The method according to any one of claims 1-2, wherein in the front lock cap (2) and/or the rear lock cap (3) at least one indentation (6) is provided which in a condition of the front lock cap (2) and rear lock cap (3) placed on each other forms a contact surface between the front lock cap (2) and the rear lock cap (3).

4. The method according to any one of claims 1-3, wherein during the capacitor discharge welding no welding material is added.

## Patentansprüche

1. Verfahren zur Herstellung eines Ringschlosses (1), umfassend:
- ein Schlossgehäuse mit einer darin enthaltenen Schlossbaugruppe;
- einen Bolzen (11);
- eine vordere Schlosskappe (2) mit zwei vorderen Schlosskappenschenkeln (4a), die mit einem vorderen Schlosskappenkörper (5a) verbunden sind; und
- eine hintere Schlosskappe (3) mit zwei hinteren Schlosskappenschenkeln (4b), die mit einem hinteren Schlosskappenkörper (5b) verbunden sind;
wobei das Verfahren wenigstens umfasst:
- Positionieren des Schlossgehäuses, so dass es sich im Wesentlichen zwischen dem vorderen Schlosskappenkörper (5a) und dem hinteren Schlosskappenkörper (5b) befindet,
- Positionieren des Bolzens (11), so dass er sich durch das Schlossgehäuse erstreckt und wenigstens teilweise zwischen den vorderen Schlosskappenschenkeln (4a) und den hinteren Schlosskappenschenkeln (4b) enthalten ist,
- Positionieren der vorderen Schlosskappe (2) und der hinteren Schlosskappe (3), so dass sie mit Kontaktflächen gegeneinanderstoßen,
- die Schlosskappenschenkel (4), die durch die vorderen Schlosskappenschenkel (4a) und die hinteren Schlosskappenschenkel (4b) gebildet werden, sowie einen Schlosskappenkörper (5), der durch den vorderen Schlosskappenkörper (5a) und den hinteren Schlosskappenkörper (5b) gebildet wird, wobei jeder mit wenigstens einer Kontaktfläche versehen ist, die sich entlang der gesamten Außenkontur der Schlosskappenschenkel (4) und entlang der gesamten Außenkontur des Schlosskappenkörpers (5) erstreckt,
- Drücken der vorderen Schlosskappe (2) und der hinteren Schlosskappe (3) gegeneinander, und
- Zusammenschweißen der vorderen Schlosskappe (2) und der hinteren Schlosskappe (3) an den Kontaktflächen;
**dadurch gekennzeichnet, dass**
das Schweißen Kondensatorentladungsschweißen ist, wobei mit einem einzigen Stromstoß für kurze Zeitdauer ein elektrischer Strom durch die vordere Schlosskappe und die hintere Schlosskappe über die Kontaktflächen geleitet wird, wobei die Zeitdauer und die Höhe des Stroms und der Spannung so sind, dass an allen Kontaktflächen das Material der
vorderen Schlosskappe und der hinteren Schlosskappe miteinander verschmilzt, und dort eine Kondensatorentladungsschweißverbindung gebildet wird, wobei beim Kondensatorentladungsschweißen die vordere Schlosskappe (2) und die hintere Schlosskappe (3) mit einer Kraft von wenigstens 80 kN aufeinander gepresst werden, wobei die Kontaktflächen durch Linienkontakte und/oder einander zugewandte Plattenendkanten (10) gebildet werden, mit einer Gesamtkontaktfläche von weniger als 700 mm² und vorzugsweise weniger als 500 mm², und wobei die Oberfläche der Kontaktflächen so klein ist, dass beim Kondensatorentladungsschweißen die Wärmeentwicklung in der vorderen Schlosskappe (2) und der hinteren Schlosskappe (3) nur lokal auftritt und dadurch der Temperaturanstieg des Bolzens (11) und des Schlossgehäuses mit der darin enthaltenen Schlossbaugruppe weniger als 50 °C und vorzugsweise weniger als 40 °C beträgt.

2. Verfahren nach Anspruch 1, wobei die wenigstens eine Kontaktfläche ausschließlich durch einander zugewandte Plattenendkanten (10) gebildet wird, die sich im Wesentlichen entlang der gesamten Umfangslänge der vorderen Schlosskappe (5a) und der hinteren Schlosskappe (5b) erstrecken.

3. Verfahren nach einem der Ansprüche 1 bis 2, wobei in der vorderen Schlosskappe (2) und/oder der hinteren Schlosskappe (3) wenigstens eine Vertiefung (6) vorgesehen ist, die in einem Zustand, in dem die vordere Schlosskappe (2) und die hintere Schlosskappe (3) aufeinandergesetzt sind, eine Kontaktfläche zwischen der vorderen Schlosskappe (2) und der hinteren Schlosskappe (3) bildet.

4. Verfahren nach einem der Ansprüche 1 bis 3, wobei während des Kondensatorentladungsschweißens kein Schweißmaterial hinzugefügt wird.

## Revendications

1. Procédé de fabrication d'un cadenas en anneau (1) comprenant :
- un boîtier de serrure avec un ensemble de verrouillage inclus à l'intérieur ;
- un pêne (11) ;
- un capuchon de verrouillage avant (2) avec deux branches de capuchon de verrouillage avant (4a) qui sont reliées à un corps de capuchon de verrouillage avant (5a) ; et
- un capuchon de verrouillage arrière (3) avec deux branches de capuchon de verrouillage arrière (4b) qui sont reliées à un corps de capuchon de verrouillage arrière (5b);
dans lequel le procédé comprend au moins :
- le positionnement du boîtier de serrure de sorte qu'il soit sensiblement entre le corps de capuchon de serrure avant (5a) et le corps de capuchon de serrure arrière (5b),
- le positionnement du pêne (11) de telle sorte qu'il s'étend à travers le boîtier de serrure et, au moins en partie, est compris entre les branches de capuchon de verrouillage avant (4a) et les branches de capuchon de verrouillage arrière (4b),
- le positionnement du capuchon de verrouillage avant (2) et le capuchon de verrouillage arrière (3) de telle sorte qu'ils viennent en butée l'un contre l'autre par des surfaces de contact,
- les branches de capuchon de verrouillage (4), formées par les branches de capuchon de verrouillage avant (4a) et les branches de capuchon de verrouillage arrière (4b), ainsi qu'un corps de capuchon de verrouillage (5), formé par le corps de capuchon de serrure avant (5a) et le corps de capuchon de serrure arrière (5b), étant chacun pourvu d'au moins une surface de contact qui s'étend le long du contour extérieur entier des branches de capuchon de serrure (4) et le long de tout le contour extérieur de la serrure corps de capuchon (5),
- les étapes consistant à presser le capuchon de verrouillage avant (2) et le capuchon de verrouillage arrière (3) l'un contre l'autre, et
- souder ensemble le capuchon de verrouillage avant (2) et le capuchon de verrouillage arrière (3) au niveau des surfaces de contact ;
**caractérisé en ce que**
le soudage est un soudage par décharge de condensateur, moyennant quoi, avec un seul pic de courant pendant une courte durée, un courant électrique est conduit à travers le capuchon de verrouillage avant et le capuchon de verrouillage arrière via les surfaces de contact, la durée et l'amplitude du courant et la tension étant tels que sur toutes les surfaces de contact, le matériau du capuchon de verrouillage avant et du capuchon de verrouillage arrière fusionnent ensemble et une connexion par soudage à décharge de condensateur y est formée, dans lequel, pendant le soudage par décharge de condensateur, le capuchon de verrouillage avant (2) et le capuchon de verrouillage arrière (3) sont pressés l'un sur l'autre avec une force d'au moins 80 kN, les surfaces de contact étant formées par des contacts de ligne et/ou des bords d'extrémité de plaque se faisant face mutuellement (10), avec une surface de contact totale inférieure à 700 mm² et de préférence inférieure à 500 mm², et dans lequel la surface des surfaces de contact est si petite que pendant le soudage par décharge du condensateur, la génération de chaleur dans le capuchon de verrouillage avant (2) et le capuchon de verrouillage arrière (3) ne se produit que localement et, par conséquent, l'augmentation de la température du pêne (11) et du boîtier de serrure avec l'ensemble de serrure inclus à l'intérieur est inférieure à 50°C et de préférence inférieure à 40°C.

2. Procédé selon la revendication 1, dans lequel la au moins une surface de contact est formée exclusivement par des bords d'extrémité de plaque se faisant face (10), qui s'étendent sensiblement sur toute la longueur circonférentielle du capuchon de verrouillage avant (5a) et du capuchon de verrouillage arrière (5b).

3. Procédé selon l'une quelconque des revendications 1 à 2, dans lequel, dans le capuchon de verrouillage avant (2) et/ou le capuchon de verrouillage arrière (3), au moins une échancrure (6) est prévue qui dans un état où, avec le capuchon de verrouillage avant (2) et le capuchon de verrouillage arrière (3) placés l'un sur l'autre, une surface de contact entre le capuchon de verrouillage avant (2) et le capuchon de verrouillage arrière (3) est établie.

4. Procédé selon l'une quelconque des revendications 1 à 3, dans lequel pendant le soudage par décharge de condensateur aucun matériau de soudage n'est ajouté.
